# EUROPEAN PATENT SPECIFICATION

(11) **EP 3 639 994 B1**
(45) Date of publication and mention of the grant of the patent: **06.07.2022**
(21) Application number: 19203694.5
(22) Date of filing: 16.10.2019
(51) Int. Cl.: B23D 47/04, B27B 5/065, B27B 27/06, B27B 27/08

(54) **CUTTING MACHINE TO CUT PANELS MADE OF WOOD OR THE LIKE**
MASCHINE ZUM AUFTEILEN VON PLATTEN AUS HOLZ ODER DERGLEICHEN
MACHINE POUR DÉCOUPER DES PANNEAUX EN BOIS OU ANALOGUE

(30) Priority: 16.10.2018 IT 201800009497
(43) Date of publication of application: 22.04.2020
(73) Proprietor: BIESSE S.p.A., 61122 Pesaro (IT)
(72) Inventor: ANDREANI, Lorenzo, 61012 GRADARA (PU) (IT); CAMPANA, Marco, 61121 PESARO (PU) (IT); SALVIA, Massimo Paolo, 61122 PESARO (PU) (IT); SANTOLINI, Fernando, 61121 PESARO (PU) (IT)
(74) Representative: Manconi, Stefano

(56) References cited:
- EP-A1- 0 621 099
- EP-A1- 2 832 507

## Description

### CROSS-REFERENCE TO RELATED APPLICATIONS

This Patent Application claims priority from Italian Patent Application No. 102018000009497 filed on October 16, 2018.

### TECHNICAL FIELD

The present invention relates to a cutting machine to cut panels made of wood or the like, as per the preamble of claim 1.

### BACKGROUND ART

In the wood panel processing industry, it is known to provide a cutting machine comprising a support frame defining a substantially horizontal support surface for at least one panel made of wood or the like; a cutting station; a main pusher to move at least one first panel through the cutting station in a first direction; a secondary pusher to move at least one second panel through the cutting station in the first direction; and a cutting device mounted in the cutting station to move in a second direction and along a cutting plane perpendicular to the first direction so as to cut the panels.

The support surface is defined by a roller device mounted upstream of the cutting station, by an output table mounted downstream of the cutting station, and by a discharge trapdoor mounted between the roller device and the output table downstream of the cutting plane to discharge the scraps generated by the cutting device under the support surface.

The cutting machine further comprises a limit stop device, which is mounted at the output table parallel to the first direction, and has at least one limit stop member movable between a raised operating position, in which the second limit stop member projects above the support surface and a lowered, rest position, in which the limit stop member extends under the support surface.

The cutting machine is also provided with a robotic manipulator mounted downstream of the output table to pick up the components separated from the panels by the cutting device and unload them from the cutting machine or feed them back to the main pusher and/or the secondary pusher for further cuts.

EP2832507 discloses a cutting machine as per the preamble of claim 1.

The known cutting machines of the type described above have a number of drawbacks mainly due to the fact that, due to the size of the components separated from the panels by the cutting device and the relatively small movement capacity of the robotic manipulator, the robotic manipulator is able to correctly position against the limit-stop device and to feed back to the main pusher and/or secondary pusher only one component at a time. As a result, the known cutting machines of the type described above have relatively long work cycles and relatively low productivity.

### DISCLOSURE OF INVENTION

The object of the present invention is to provide a cutting machine to cut panels made of wood and the like which resolves the drawbacks described above and that is simple and economical to make.

According to the present invention, there is provided a cutting machine to cut panels made of wood or the like as claimed in the attached claims.

### BRIEF DESCRIPTION OF THE DRAWINGS

The present invention will now be described with reference to the appended drawings, which illustrate a nonlimiting embodiment, wherein:
Figure 1 is a schematic perspective view, with parts removed for clarity, of a preferred embodiment of the cutting machine of the present invention;
Figure 2 is a schematic plan view, with parts removed for clarity, of the cutting machine in Figure 1;
Figure 3 is a schematic side view, with parts in cross-section and parts removed for clarity, of the cutting machine in Figure 1;
Figures 4 and 5 are two schematic perspective views, on a enlarged scale with parts removed for clarity, of a first detail of the cutting machine in Figure 1; and
Figures 6, 7 and 8 are three schematic perspective views, with parts removed for clarity, of a second detail of the cutting machine in Figure 1.

### BEST MODE FOR CARRYING OUT THE INVENTION

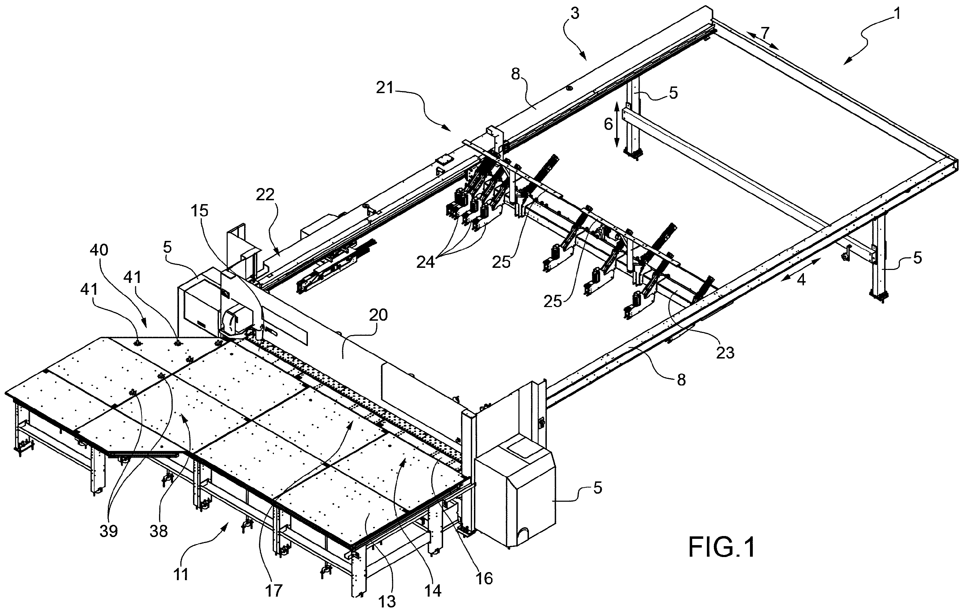

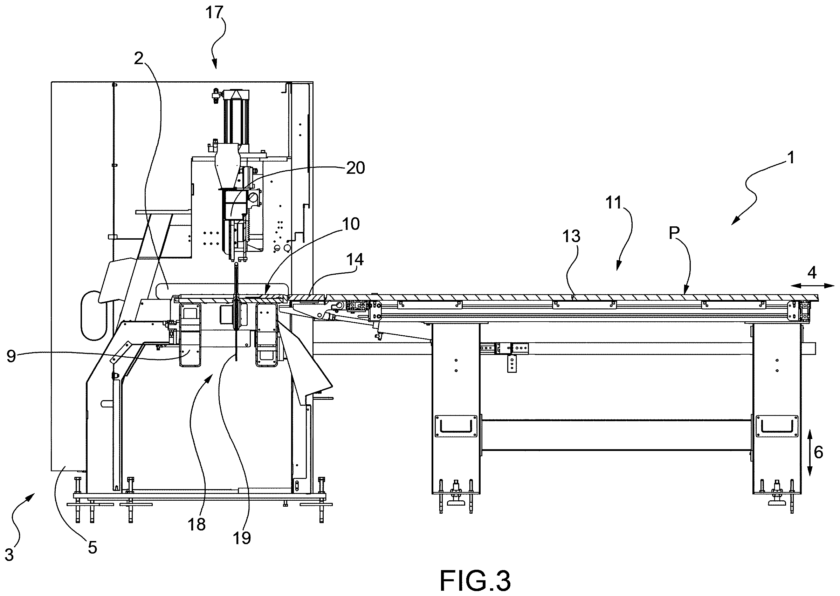

With reference to Figures 1, 2, and 3, reference numeral 1 globally denotes a cutting machine to cut flat panels 2 made of wood or the like, with a substantially rectangular shape.

The machine 1 comprises a gantry frame 3, which is substantially shaped as a rectangular-based parallelepiped, extends in a horizontal direction 4, and has four vertical edges each defined by a respective upright 5 parallel to a vertical direction 6 transverse to the direction 4.

Each upright 5 is aligned with a corresponding upright 5 in the direction 4 and a corresponding upright 5 in a horizontal direction 7 orthogonal to the directions 4 and 6.

The frame 3 also comprises two longitudinal guide members 8 parallel to each other, each extending in the direction 4, and connecting two corresponding uprights 5; a crossbar 9, extending in the direction 7, is limited by a flat upper face 10 perpendicular to the direction 6, and connects two of the four uprights 5 to each other; and two support devices 11, which are arranged on opposite bands of the crossbar 9 in the direction 4, and define, together with the face 10, a substantially horizontal support surface P for the panels 2.

The device 11 upstream of the crossbar 9 comprises a plurality of roller bars 12 parallel to each other and to the direction 4, and the device 11 downstream of the crossbar 9 comprises an output table 13.

The frame 3 is also provided with a discharge trapdoor 14 mounted between the crossbar 9 and the table 13 to discharge underneath the surface P the scraps generated by cutting the panels 2.

The trapdoor 14 comprises, in this case, two support plates 15, 16, which are aligned with each other in the direction 7, and are movable independently of each other, under the thrust of respective actuating devices (not illustrated), between respective raised closing positions, in which the plates 15, 16 are coplanar with the surface P, and respective lowered opening positions, in which the plates 15, 16 allow the processing scraps to fall below the plane P.

In this case, the plate 15 has a length, as measured parallel to the direction 7, less than a length of the plate 16, also as measured parallel to the direction 7.

The machine 1 further comprises a cutting station 17, which is made at the crossbar 9 and the relative uprights 5, and is equipped with a cutting assembly 18 of the known type coupled in a known manner to the crossbar 9 to make, in relation to the frame 3 and under the thrust of a known actuating device not illustrated, straight movements in the direction 7.

The cutting assembly 18 has a blade 19 and an engraver (not shown) mounted to rotate around respective rotation axes parallel to each other and to the direction 4 and to make straight movements in the direction 6 between relative lowered rest positions, in which the blade 19 and the engraver (not shown) are arranged under the surface P to allow the advancement of the panels 2 along the surface P, and relative raised operating positions, in which the blade 19 and the engraver (not shown) protrude through the crossbar 9 above said surface P to cut the panels 2.

The blade 19 and the engraver (not shown) are also moved by the assembly 18 along a cutting plane T made through the crossbar 9 perpendicularly to the direction 4 with a reciprocating rectilinear movement including an outward stroke, in which the engraver (not shown), arranged in front of the blade 19 in the advancement direction 7 of the assembly 18, engraves the panel 2 arranged on the surface P and the blade 19 cuts the panels 2, and a return stroke.

The assembly 18 acts in conjunction with a known type of presser device 20, which extends above the surface P in the direction 7, and is movable, with respect to the frame 3, in the direction 6 between a raised rest position and a lowered operating position, in which the panels 2 are clamped to the surface P to be cut by the assembly 18 parallel to the direction 7.

The machine 1 further comprises a main pusher 21 and a secondary pusher 22 configured to move the panels 2 along the surface P and through the station 17 in both directions 4.

The main pusher 21 comprises a motorised carriage 23, which is mounted above the aforementioned roller bars 12, extends between the two members 8 in the direction 7, and is movable along the members 8 in the direction 4 under the thrust of a known actuation device, not illustrated.

The carriage 23 supports a plurality of gripping members 24, which are distributed along the carriage 23 in the direction 7, and are movable along the carriage 23 in the direction 7 during a pusher 21 set-up phase.

Each member 24 is also movable between a raised rest position and a lowered operating position, and has the form of a gripper comprising a lower jaw and an upper jaw movable with respect to each other between a clamping position and a release position of at least one panel 2.

The pusher 21 is also provided with two thrust bars 25 mounted along the carriage 23 in direction 7.

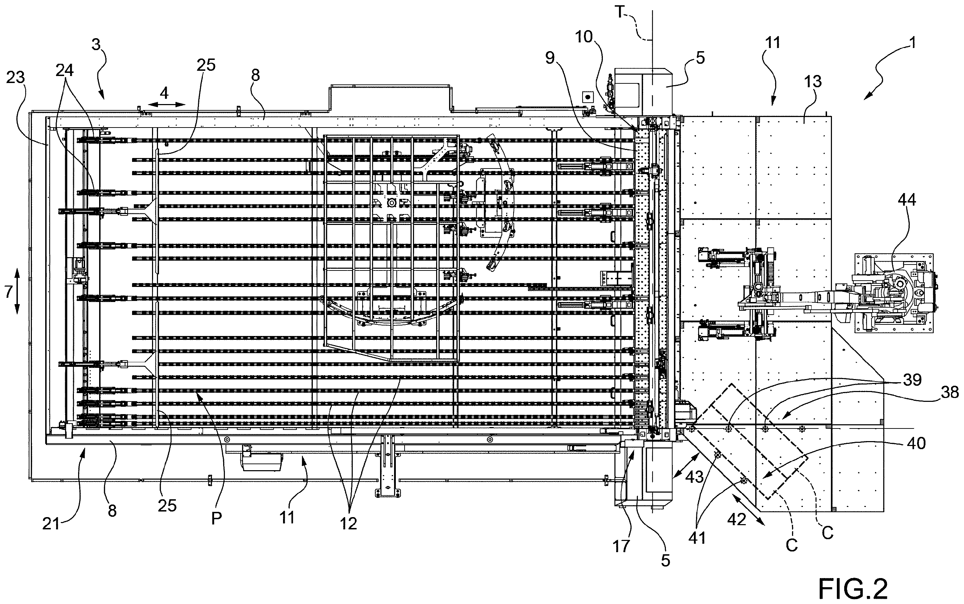

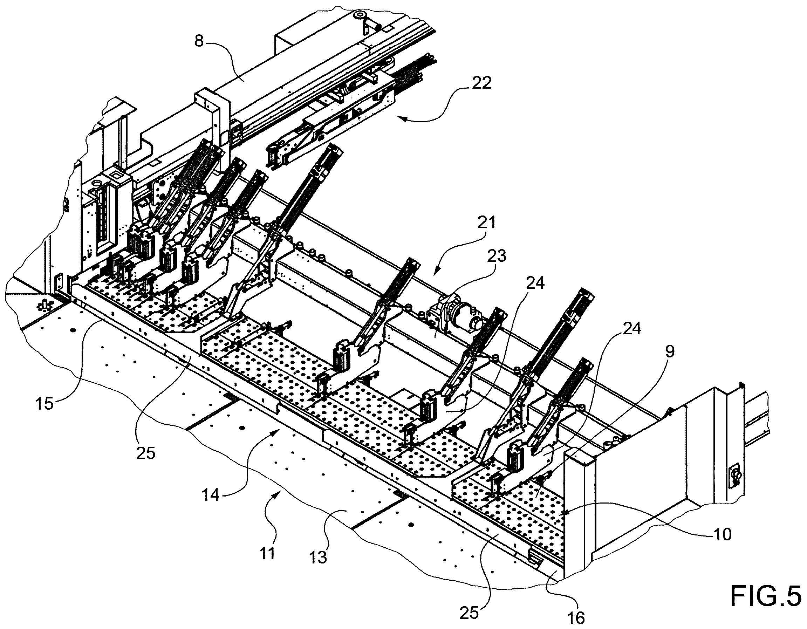

Each bar 25 is movable between a raised rest position (Figure 1), in which the bar 25 is placed above the members 24, and a lowered operating position (Figure 5), in which the bar 25 is placed in front of the members 24 in the direction 4 to move along the table 13 the components C (Figure 2) separated from the panels 2 by the blade 19 and/or to push the scraps into the trapdoor 14.

With regard to the above, it should be noted that the uprights 5 associated with the station 17 limit a work area of the pusher 21 and the trapdoor 14 laterally in the direction 7.

The secondary pusher 22 comprises a motorised carriage 26, which extends under one of the members 8, and is movable along the member 8 in the direction 4 under the thrust of a known actuation device, not illustrated.

The carriage 26 supports a first horizontal slide 27, which is slidingly coupled to the carriage 26 to move, with respect to the carriage 26, in the direction 7, and which bears connected thereto a gripping member 28 for at least one panel 2.

The member 28 has an elongated, substantially parallelepiped shape, extends in the direction 4, and is defined by a gripper comprising a lower jaw 29 and an upper jaw 30 movable with respect to each other between a clamping position and a release position of at least one panel 2.

The member 28 is associated with a first thrust member 31, which has an elongated shape, extends in the direction 4, and comprises two thrust arms 32 arranged on opposite bands of the member 28 in the direction 7.

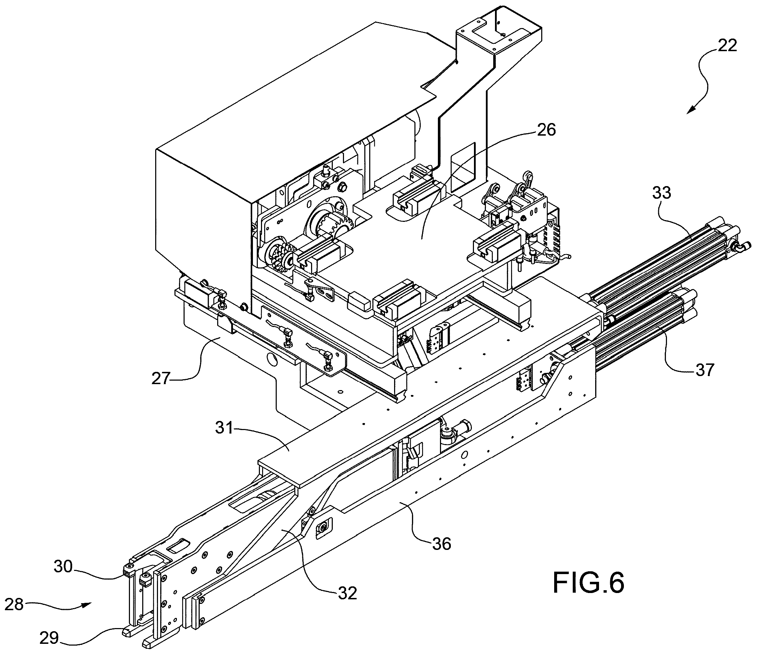

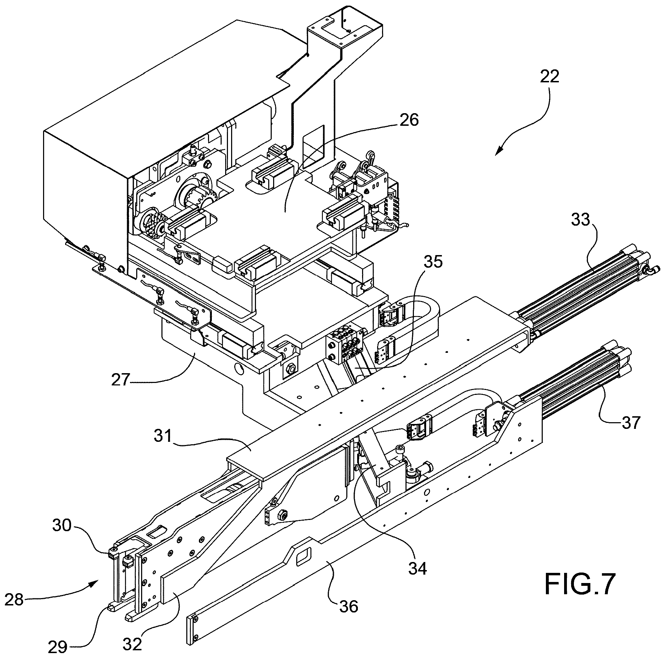

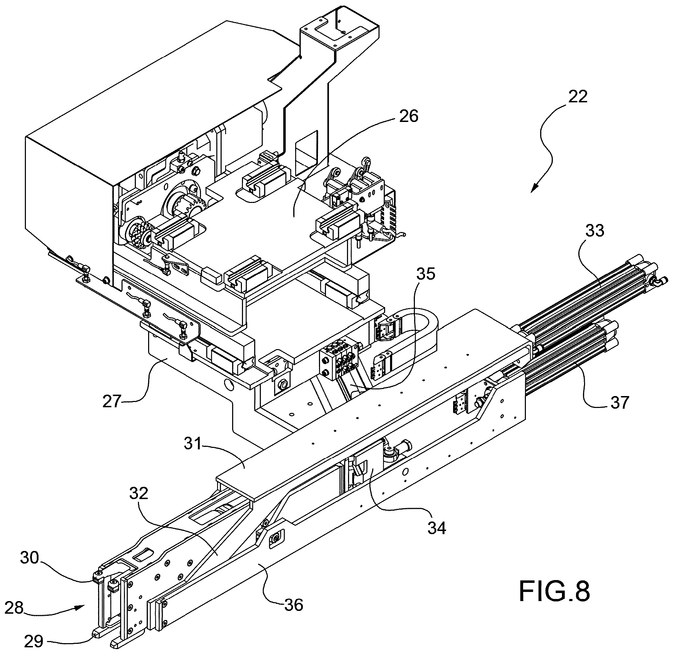

The member 31 is slidingly coupled to the member 28 to move, with respect to the member 28 and under the thrust of an actuator cylinder 33, in the direction 4 between a rearward position (Figures 6 and 7), in which the member 28 protrudes from the member 31 in the direction 4, and an advanced position (Figure 8), in which the arms 32 protrude from the member 28 in the direction 4 to move along the table 13 the components C separated from the panels 2 by the blade 19 and/or to push the scraps into the trapdoor 14.

The pusher 22 further comprises a second horizontal slide 34, which is slidingly coupled to the slide 27 to move in an inclined direction between the directions 4 and 7 with respect to the slide 27 under the thrust of an actuator cylinder 35.

The slide 34 supports a second thrust member 36, which has an elongated flat shape, extends in the direction 4 parallel to the member 28, and is moved by the cylinder 35 between a rest position (Figures 6 and 8) and an operating position (Figure 7), in which the member 36 moves away from the member 28 and acts in conjunction with the member 28 to move the panels 2 along the frame 3 in the direction 4.

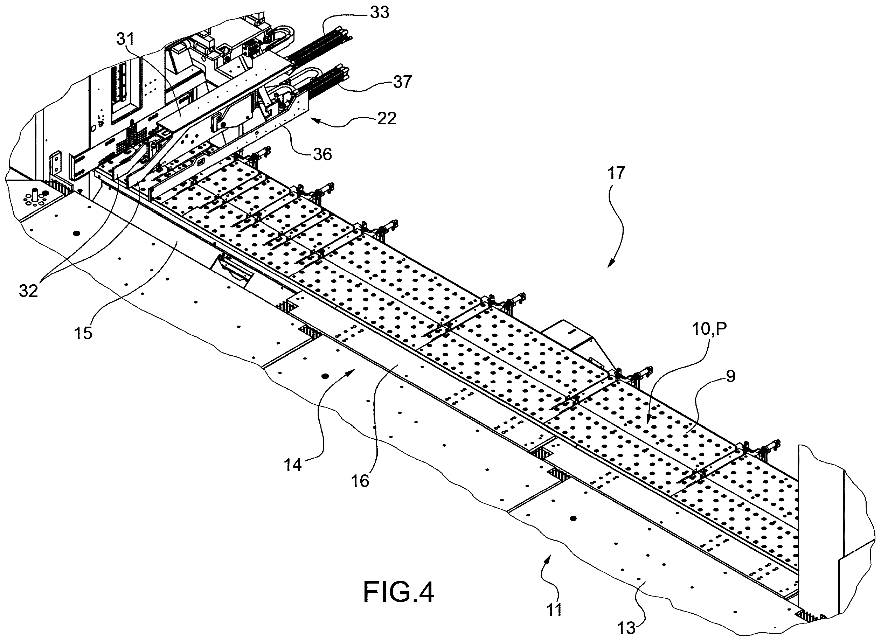

The member 36 is also slidingly coupled to the slide 34 to move, with respect to the slide 34 and under the thrust of an actuator cylinder 37, in the direction 4 between a rearward position (Figures 6, 7, and 8), in which the member 28 protrudes from the member 36 in the direction 4, and an advanced position (Figure 4), in which the member 36 protrudes from the member 28 in the direction 4 and cooperates with the member 31 to move the components C separated from the panels 2 by the blade 19 along the table 11 and/or to push the scraps into the trapdoor 14.

With regard to the above, it should be noted that plate 15 is substantially aligned with the secondary pusher 22 in the direction 4 and plate 16 is substantially aligned with the main pusher 21 in the direction 4.

The table 13 is also equipped with a first limit stop device 38 comprising a plurality of pin members 39, which are aligned with each other in the direction 4, and are movable between respective raised positions, in which the members 39 protrude above the surface P, and respective lowered positions, in which the members 39 are at most coplanar with said surface P.

When arranged in the raised positions, the members 39 allow a correct positioning of the panels 2 in the direction 7.

The table 13 is also equipped with a second limit stop device 40 comprising a plurality of pin members 41, which are aligned with each other in a horizontal direction 42 inclined at different angles of 0° and 90° with respect to the directions 4 and 7, and are movable between respective raised positions, in which the members 41 protrude above the surface P, and respective lowered positions, in which the members 41 are at most coplanar with said surface plane P.

When arranged in their raised positions, the members 41 allow a correct positioning of the panels 2 in a horizontal direction 43 transversal to the direction 42.

With regard to the above, it should be noted that:
the device 40 extends outside a work area of the main pusher 21 limited in the direction 7 by the uprights 5 of the cutting station 17 and therefore having a width, measured parallel to the direction 7, approximating by default a distance between the uprights 5 also measured parallel to the direction 7; and
the member 39 facing the cutting plane T defines both part of the device 38 and part of the device 40.

The machine 1 is also equipped with a robotic manipulator 44, which is located downstream of table 13 in the direction 4, and is configured to hold and move the components C separated from the panels 2 by the blade 19.

The two plates 15, 16 of the trapdoor 14 allow the cutting assembly 18 to cut the panel 2 retained by the main pusher 21 even when the plate 15 is arranged in the open position to discharge the machining scraps of the panel 2 retained by the secondary pusher 22 under the surface P and to cut the panel 2 retained by the secondary pusher 22 even when the plate 16 is placed in the open position to discharge the machining scraps of the panel 2 retained by the main pusher 21 under the surface P.

The thrust members 31, 36 associated with the gripping member 28 allow the components C separated by the blade 19 from the panel 2 held by the secondary pusher 22 to be moved forward on the table 13, and/or to discharge in the trapdoor 14 the processing scraps of the panel 2 held by the secondary pusher 22, thus avoiding the use of the pushing bars 25 and, therefore, of the main pusher 21.

The limit stop device 40 allows the manipulator 44, unable to correctly position more than one component C against the limit stop device 38 in the direction 7, first to correctly position at least two components C against the pin members 41 in the direction 43 and then to correctly feed the two components C to the gripping devices 24 of the main pusher 21 and the gripping device 28 of the secondary pusher 22 parallel to the direction 4 and/or to correctly position only one component C against the pin members 41 when the work area of the pusher 21 is occupied and prevents the positioning of the component C against the pin members 39.

## Claims

1. -A cutting machine to cut panels (2) made of wood or the like, the machine comprising a cutting station (17); a main pusher (21) to move at least one first panel (2) through the cutting station (17) in a first direction (4); a secondary pusher (22) to move at least one second panel (2) through the cutting station (17) in the first direction (4); a cutting assembly (18), which is mounted in the cutting station (17) and is movable in a second direction (7) and along a cutting surface (T), which are substantially perpendicular to the first direction (4), so as to cut the panels (2); a support frame (3), which defines a support surface (P) for the panels (2); a first limit stop device (38), which is mounted downstream of the cutting station (17) parallel to the first direction (4) so as to allow at least one component (C) separated from said first and/or second panel (2) to be correctly positioned on the support surface (P) in the second direction (7); a second limit stop device (40), which is mounted downstream of the cutting station (17) parallel to a third direction (42) so as to allow at least one component (C) separated from said first and/or second panel (2) to be correctly positioned on the support surface (P) in a fourth direction (43), which is transverse to the third direction (42); and a robotic manipulator (44); and being **characterized in that** said third and fourth direction (42, 43) are inclined according to respective angles other than 0° and 90° relative to said first and second direction (4, 7) and **in that** said robotic manipulator (44) is configured to move at least one component (C) against the first limit stop device (38) and at least two components (C) next to one another against the second limit stop device (40).

2. - A cutting machine according to claim 1, wherein the first limit stop device (38) comprises at least one first limit stop member (39), which is movable between an operating position, in which the first limit stop member (39) projects above the support surface (P), and a rest position, in which the first limit stop member (39) extends under the support surface (P).

3. - A cutting machine according to claim 1 or 2, wherein the second limit stop device (40) comprises at least one second limit stop member (41), which is movable between an operating position, in which the second limit stop member (41) projects above the support surface (P), and a rest position, in which the second limit stop member (41) extends under the support surface (P).

4. - A cutting machine according to any one of the preceding claims, wherein the second limit stop device (40) extends on the outside of a work area of the main pusher (21) .

5. - A cutting machine according to claim 4, wherein the cutting station (17) is delimited in the second direction (7) by two uprights (5); the work surface of the main pusher (21) having a width, measured parallel to the second direction (7), which rounds down a distance between the two uprights (5), which is also measured parallel to the second direction (7).

6. - A cutting machine according to any one of the preceding claims, wherein the robotic manipulator (44) is mounted downstream of the cutting station (17).

7. - A cutting machine according to any one of the preceding claims, wherein the support surface (P) is at least partly defined by an output table (13) mounted downstream of the cutting station (17) so as to receive the components (C) separated from the panels (2); the robotic manipulator (44) facing the output table (13) in the first direction (4).

## Patentansprüche

1. Schneidmaschine zum Schneiden von Platten (2) aus Holz oder dergleichen, umfassend eine Schneidstation (17); einen Hauptschieber (21) zum Bewegen wenigstens einer ersten Platte (2) durch die Schneidstation (17) in eine erste Richtung (4); einen Sekundärschieber (22) zum Bewegen wenigstens einer zweiten Platte (2) durch die Schneidstation (17) in die erste Richtung (4); eine Schneideinrichtung (18), welche in der Schneidstation (17) verbaut ist und in einer zweiten Richtung (7) und entlang einer Schneidfläche (T) bewegbar ist, welche im Wesentlichen senkrecht zur ersten Richtung (4) sind, um die Platten (2) zu schneiden; ein Stützrahmen (3), welcher eine Stützfläche (P) für die Platten (2) definiert; einen ersten Endanschlag (38), welcher stromab der Schneidstation (17) parallel zur ersten Richtung (4) verbaut ist, um eine korrekte Positionierung wenigstens einer von besagter erster und/oder zweiter Platte (2) getrennten Komponente (C) auf der Stützfläche (P) in die zweite Richtung (7) zu ermöglichen; einen zweiten Endanschlag (40), welcher stromab der Schneidstation (17) parallel zu einer dritten Richtung (42) verbaut ist, um eine korrekte Positionierung wenigstens einer von besagter erster und/oder zweiter Platte (2) getrennten Komponente (C) auf der Stützfläche (P) in eine vierte Richtung (43), welche quer zur dritten Richtung (42) verläuft, zu ermöglichen; und einen Manipulationsroboter (44);
**dadurch gekennzeichnet, dass**
besagte dritte und vierte Richtung (42, 43) gegenüber der ersten und zweiten Richtung (4, 7) um andere Winkel als 0° und 90° geneigt sind, und, dass besagter Manipulationsroboter (44) dazu eingerichtet ist zumindest eine Komponente (C) gegen den ersten Endanschlag (38) zu bewegen und wenigstens zwei nebeneinander liegende Komponenten (C) gegen den zweiten Endanschlag (40) zu bewegen.

2. Schneidmaschine nach Anspruch 1, wobei der erste Endanschlag (38) wenigstens ein erstes Endanschlagelement (39) umfasst, welches zwischen einer Arbeitsstellung, in welcher das erste Endanschlagelement (39) über die Stützfläche (P) hinausragt, und einer Ruhestellung, in welcher sich das erste Endanschlagelement (39) unter der Stützfläche (P) erstreckt, bewegbar ist.

3. Schneidmaschine nach Anspruch 1 oder 2, wobei der zweite Endanschlag (40) wenigstens ein zweites Endanschlagelement (41) umfasst, welches zwischen einer Arbeitsstellung, in welcher das zweite Endanschlagelement (41) über die Stützfläche (P) hinausragt, und einer Ruhestellung, in welcher sich das zweite Endanschlagelement (41) unter der Stützfläche (P) erstreckt, bewegbar ist.

4. Schneidmaschine nach einem der vorhergehenden Ansprüche, wobei sich der zweite Endanschlag (40) an der Außenseite eines Arbeitsbereichs des Hauptschiebers (21) erstreckt.

5. Schneidmaschine nach Anspruch 4, wobei die Schneidstation (17) in die zweite Richtung (7) durch zwei Stützen (5) begrenzt ist; und die Arbeitsfläche des Hauptschiebers (21) eine parallel zur zweiten Richtung (7) gemessene Breite aufweist, die im Wesentlichen einem ebenfalls parallel zur zweiten Richtung (7) gemessenen Abstand zwischen den beiden Ständern (5) entspricht.

6. Schneidmaschine nach einem der vorhergehenden Ansprüche, wobei der Manipulationsroboter (44) stromab der Schneidstation (17) angeordnet ist.

7. Schneidmaschine nach einem der vorhergehenden Ansprüche, wobei die Stützfläche (P) zumindest teilweise durch einen stromab der Schneidstation (17) angeordneten Ausgabetisch (13) definiert ist, um die von den Platten (2) getrennten Komponenten (C) zu empfangen; und der Manipulationsroboter (44) dem Ausgabetisch in der ersten Richtung (4) zugewandt ist.

## Revendications

1. Machine de coupe pour découper des panneaux (2) en bois ou similaires, la machine comprenant une station de coupe (17) ; un poussoir principal (21) pour déplacer au moins un premier panneau (2) à travers la station de coupe (17) dans une première direction (4) ; un poussoir secondaire (22) pour déplacer au moins un second panneau (2) à travers la station de coupe (17) dans la première direction (4) ; un ensemble de coupe (18) qui est monté dans la station de coupe (17) et est mobile dans une deuxième direction (7) et le long d'une surface de coupe (T), qui sont sensiblement perpendiculaires à la première direction (4), afin de découper les panneaux (2) ; un bâti de support (3) qui définit une surface de support (P) pour les panneaux (2) ; un premier dispositif de butée de fin de course (38) qui est monté en aval de la station de coupe (17) parallèlement à la première direction (4) afin de permettre à au moins un composant (C) séparé dudit premier et/ou second panneau (2) d'être correctement positionné sur la surface de support (P) dans la deuxième direction (7) ; un second dispositif de butée de fin de course (40) qui est monté en aval de la station de coupe (17) parallèlement à une troisième direction (42) afin de permettre à au moins un composant (C) séparé dudit premier et/ou second panneau (2) d'être correctement positionné sur la surface de support (P) dans une quatrième direction (43) qui est transversale à la troisième direction (42) ; et un manipulateur robotisé (44) ; et étant **caractérisée en ce que** lesdites troisième et quatrième directions (42, 43) sont inclinées selon des angles respectifs différents de 0° et de 90° par rapport auxdites première et deuxième directions (4, 7) et **en ce que** ledit manipulateur robotisé (44) est configuré pour déplacer au moins un composant (C) contre le premier dispositif de butée de fin de course (38) et au moins deux composants (C) l'un à côté de l'autre contre le second dispositif de butée de fin de course (40) .

2. Machine de coupe selon la revendication 1, dans laquelle le premier dispositif de butée de fin de course (38) comprend au moins un premier élément de butée de fin de course (39) qui est mobile entre une position opérationnelle dans laquelle le premier élément de butée de fin de course (39) fait saillie au-dessus de la surface de support (P), et une position de repos dans laquelle le premier élément de butée de fin de course (39) s'étend sous la surface de support (P).

3. Machine de coupe selon la revendication 1 ou 2, dans laquelle le second dispositif de butée de fin de course (40) comprend au moins un second élément de butée de fin de course (41) qui est mobile entre une position opérationnelle dans laquelle le second élément de butée de fin de course (41) fait saillie au-dessus de la surface de support (P), et une position de repos dans laquelle le second élément de butée de fin de course (41) s'étend sous la surface de support (P).

4. Machine de coupe selon l'une quelconque des revendications précédentes, dans laquelle le second dispositif de butée de fin de course (40) s'étend à l'extérieur d'une zone de travail du poussoir principal (21) .

5. Machine de coupe selon la revendication 4, dans laquelle la station de coupe (17) est délimitée dans la deuxième direction (7) par deux montants (5) ; la surface de travail du poussoir principal (21) ayant une largeur, mesurée parallèlement à la deuxième direction (7), qui arrondit vers le bas une distance entre les deux montants (5), qui est également mesurée parallèlement à la deuxième direction (7).

6. Machine de coupe selon l'une quelconque des revendications précédentes, dans laquelle le manipulateur robotisé (44) est monté en aval de la station de coupe (17).

7. Machine de coupe selon l'une quelconque des revendications précédentes, dans laquelle la surface de support (P) est au moins partiellement définie par un tableau de données de sortie (13) monté en aval de la station de coupe (17) afin de recevoir les composants (C) séparés des panneaux (2) ; le manipulateur robotisé (44) faisant face au tableau de données de sortie (13) dans la première direction (4).
